# EUROPÄISCHE PATENTSCHRIFT

(11) **EP 1 132 293 B1**
(45) Veröffentlichungstag und Bekanntmachung des Hinweises auf die Patenterteilung: **15.09.2004**
(21) Anmeldenummer: 01102446.0
(22) Anmeldetag: 03.02.2001
(51) Int. Cl.: B64D 11/06, B60N 3/08, B60R 7/04

(54) **Passagiersitz mit einer Vorrichtung zur Aufnahme von sitzplatzbezogenem Zubehör und Abfall**
Passenger seat with adaptor device for accessories and waste disposal bin
Siège de passager avec dispositif d'adaptation pour accessoires et poubelle

(30) Priorität: 09.03.2000 DE 10011423; 24.10.2000 DE 10052593
(43) Veröffentlichungstag der Anmeldung: 12.09.2001
(73) Patentinhaber: Airbus Deutschland GmbH, 21129 Hamburg (DE)
(72) Erfinder: Romca, Jens, 54106 Kiel (DE); Müller, Jochen, 54106 Kiel (DE); Schumacher, Markus, 21614 Buxtehude (DE)
(74) Vertreter: Hansmann, Dierk, Dipl.-Ing.

(56) Entgegenhaltungen:
- WO-A-93/08077
- WO-A-97/26811
- FR-A- 2 727 067
- US-A- 5 725 310
- PATENT ABSTRACTS OF JAPAN vol. 1999, no. 01, 29. Januar 1999 (1999-01-29) & JP 10 264811 A (KOITO IND LTD), 6. Oktober 1998 (1998-10-06)

## Beschreibung

Die Erfindung betrifft einen Passagiersitz mit einer Vorrichtung zur Aufnahme von sitzplatzbezogenem Zubehör und Abfall, wobei der Passagiersitz vorzugsweise Bestandteil einer Sitzgruppe in einer Flugzeugpassagierkabine ist.

Für die Aufnahme von Zubehör und Abfall an Flugzeugsitzen sind mehrere Lösungen bekannt. Eine Tasche zur Aufnahme von Sicherheitsvorschriften, Bordinformationen, Zeitungen, Zeitschriften und dergleichen ist üblicherweise an der Rückenlehne eines Passagiersitzes angeordnet und ist beispielsweise gemäß DE 3447179 als Aufbewahrungsnetz mit elastischen Strängen ausgebildet. Zur Abfallaufnahme vom im Sitzbereich des Passagiers anfallenden Abfalls, wie z.B. Getränkebecher, Flaschen, Verpackungsmaterial von der gereichten Verpflegung oder Papierreste werden entweder ebenfalls in vielen Fällen die an der Rückenlehne des im jeweils vorderen Sitz angeordneten Aufbewahrungsnetze verwendet oder der Abfall wird im Fußbereich des Sitzes abgelegt. Diese Methoden der Abfallaufbewahrung bereiten jedoch den Passagieren große Unannehmlichkeiten, da ein beidhändiges Handling notwendig ist und Verschmutzungen auftreten können.
Auch ist es für die Kabinenreinigung, die während der Bodenzeit des Flugzeuges stattfindet, von großem Aufwand, die von den Fluggästen hinterlassenen Abfälle zu entfernen und das Zubehör neu zu ordnen bzw. zu ergänzen. Wenn Abfälle in das Aufbewahrungsnetz zusammen mit dem regulären Zubehör gesteckt werden, muss das Reinigungspersonal beidhändig aus den meist überquellenden Netzen die Abfälle heraussammeln, das notwendige im Netz verbleibende Zubehör ordnen, säubern oder ergänzen und größere Abfälle vom Boden aufsammeln. Die verwendete Zeit für das Beseitigen der Abfälle verlängert die benötigte Zeit für die Kabinenreinigung, was sich negativ auf die Bodenzeit eines Flugzeuges - eine maßgebliche Größe für die Wirtschaftlichkeit eines Flugzeuges - auswirkt.

Aus DE 43 19 214 ist eine Lösung bekannt, die an der Rückenlehne eines Passagiersitzes angeordnete Abfallbeutel vorschlägt. Derartige Abfallbeutel sollen im Bereich des abklappbaren Tisches, an einer Leiste gehaltert, angeordnet sein. Die Leiste kann an der Rückenlehne des Sitzes im Bereich des hochgeklappten Tisches, direkt darunter oder direkt am Tisch befestigt werden. Eine Abfallsammlung getrennt vom Aufbewahrungsnetz ist mit dieser Lösung möglich, jedoch ist es dem Passagier überlassen, den Abfall in diesen Abfallbeutel zu entsorgen oder aber auch in das Aufbewahrungsnetz zu stecken. Wenn die Zugänglichkeit zum Abfallbeutel schlecht ist, beispielsweise bei einem noch hochgeklappten Tisch, wird ein Passagier trotzdem noch Abfall in das Aufbewahrungsnetz stecken und der Aufwand zur Kabinenreinigung ist nicht reduziert, da das Reinigungspersonal bei der Abfallentfernung trotzdem noch die Netze durchsehen, eventuell Abfall entfernen und das Zubehör ordnen muss.

Das Dokument WO-A-97 26811 zeigt einen Passagiersitz, wobei im rückwärtigen Teil der Rückenlehne ein Abfallbehälter vorgesehen ist sowie ein Aufnahmenetz für Zeitschriften oder dgl.. Der Abfallbehälter ist vorgesehen, um die während einer Reise zu entsorgenden Sachen eines Passagiers aufzunehmen und damit auch ein erleichtertes Reinigen der Kabine zu ermöglichen. Jedoch ist es mit der angegebenen Ausgestaltung der Aufnahme für sitzplatzzugeordnetes Zubehör als Netz für einen Passagier möglich auch kleine und kompakte Gegenstände, wie Flaschen, Gläser oder Joghurtbecher abzulegen, beispielsweise wenn der Abfallbehälter überfüllt ist oder sperrige Sachen anderweitig schwer entsorgt werden können. Das Reinigungspersonal muss demgemäß neben dem Entfernen des Abfallbehälters auch die Netze durchsehen, eventuellen Abfall entfemen und die Sicherheitsanleitung sowie Zeitschriften neu ordnen.

Aus JP-A-10 264 811 ist eine Zeitschriftenaufnahme bekannt, die ein Rahmenelement aufweist und eine Tasche bildet. Auch hier können kleine und kompakte Gegenstände abgelegt werden, die eigentlich einer Entsorgung zugeführt werden sollen und nicht in die Zeitschriftenaufnahme gehören.

Die WO-A-93 08077 zeigt einen Passagiersitz mit einer an der Rückenlehne angeordneten netzartigen Aufnahmetasche. Über eine Klemmleiste ist ein Abfallbeutel oder Behälter mit der Aufnahmetasche lösbar verbunden. Die Klemmleiste weist ein u-förmiges Profil auf, wobei ein Schenkel ein Bestandteil der Aufnahme für den Abfallbeutel bildet sowie ein weiterer Klemmschenkel an der Randverstärkung des Aufnahmenetzes angeordnet ist. Neben dem Aufnahmenetz für Zeitschriften oder dgl. wird somit auch ein Abfallaufnahmebeutel angeboten. Wie bereits bei den vorherigen Dokumenten ist es auch hier möglich, im Netz kleine und kompakte Gegenstände abzulegen und die Zeitschriftenaufnahme als Abfallbehälter zu verwenden.

Der Erfindung liegt daher die Aufgabe zugrunde, eine Vorrichtung zur Aufnahme von sitzplatzbezogenem Zubehör und Abfall an Passagiersitzen derartig auszubilden, dass die aus dem Stand der Technik bekannten Nachteile beseitigt und insbesondere für den Fluggast eine klare Trennung von Abfall und sitzplatzbezogenem Zubehör erreichbar ist und sich der Aufwand zur Kabinenreinigung als ein maßgeblicher Faktor der notwendigen Bodenzeit eines Flugzeuges reduziert.

Diese Aufgabe wird bei einer gattungsgemäßen Vorrichtung mit den im Patentanspruch 1 genannten Maßnahmen gelöst.

Dabei ist insbesondere von Vorteil, dass die Wirtschaftlichkeit eines Verkehrsflugzeuges erhöht werden kann, wenn mit einer klaren und sinnvollen Organisation der anfallenden Abfälle und der dem Sitzplatz zugeordneten Zubehörteile die Kabinenreinigungszeit verkürzt werden kann und somit die Bodenzeit eines Flugzeuges zwischen aufeinanderfolgenden Flügen - genannt Turn-Round-Time - verkürzt werden kann.

Weiterbildungen und vorteilhafte Ausgestaltungen sind in den Unteransprüchen 2 bis 5 angegeben sowie in der nachfolgenden Figurenbeschreibung dargestellt.

In der Zeichnung sind Ausführungsbeispiele der Erfindung dargestellt, die nachstehend anhand der Figuren 1 bis 4 näher beschrieben werden. In den Figuren sind gleiche Bauteile mit gleichen Bezugszeichen versehen.
Es zeigt
- Fig. 1: eine Ansicht auf den rückwärtigen Teil einer Passagiersitzgruppe mit einer ersten Ausgestaltung der erfindungsgemäßen Vorrichtung,
- Fig. 2: eine Detailansicht der Passagiersitzgruppe gemäß Fig. 1,
- Fig. 3: eine Ansicht auf den rückwärtigen Teil einer Passagiersitzgruppe mit einer zweiten Ausgestaltung der erfindungsgemäßen Vorrichtung und
- Fig. 4: eine Ausführungsform eines Abfalltütenspenders als Bestandteil der erfindungsgemäßen Vorrichtung.

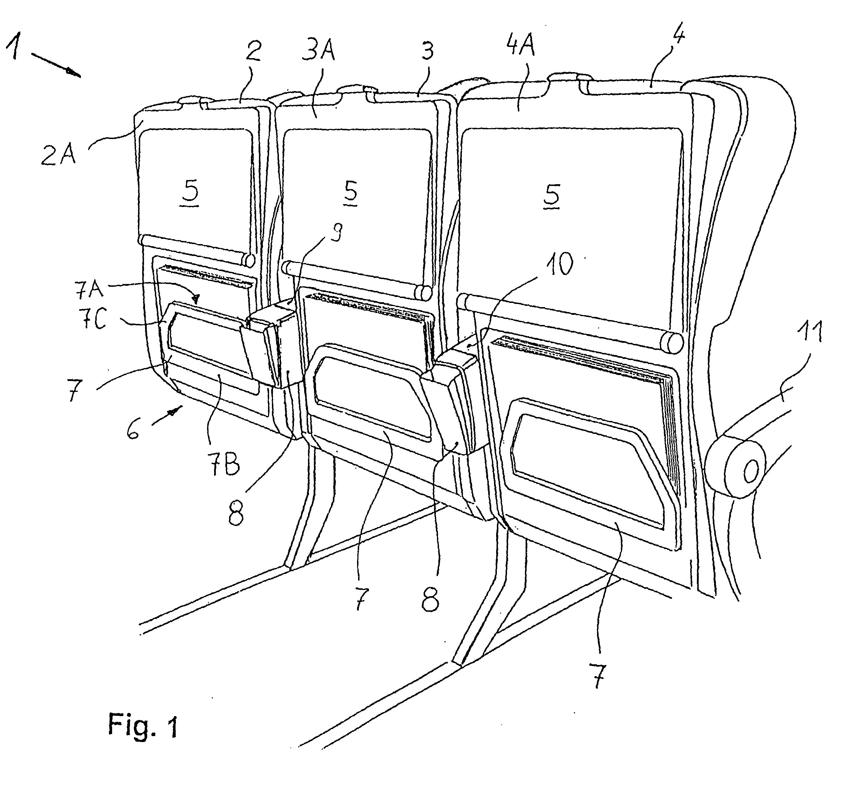

In Fig. 1 ist eine Passagiersitzgruppe 1 in einer Ansicht von hinten dargestellt. Eine derartige Passagiersitzgruppe 1 besteht in der gezeigten Ausführung aus drei Passagiersitzen 2, 3 und 4, deren Rückenlehnen 2A, 3A, 4A in der Ansicht auf den rückwärtigen Teil dargestellt sind. Der obere Bereich der Rückenlehnen 2A, 3A und 4A weist jeweils einen abklappbaren Tisch 5 auf, der bei Bedarf von dem hinter dem Passagiersitz 2, 3 oder 4 Sitzenden abgeklappt werden kann. Im unteren Bereich der Rückenlehnen 2A, 3A und 4A sind anstelle der üblichen Aufbewahrungsnetze am jeweiligen Sitz 2, 3 oder 4 je eine erfindungsgemäße Vorrichtung 6 zur Aufnahme von Zubehör und an den Zwischenarmlehnen 9 und 10 ein Abfallbehälter 8 angeordnet.
Um auszuschließen, dass die Aufbewahrungsnetze für Zubehör wie Bordzeitschriften, Sicherheitsanweisungen und Spucktüten als Abfallbehältnis genutzt werden, befindet sich anstelle der Netze je ein Klemmbügel 7 als Zeitschriftenhalter an den Rückenlehnen 2A, 3A und 4A. Der Klemmbügel 7 ist ausschließlich für die Aufnahme von flächigen Gegenständen, wie Zeitschriften, Sicherheitsanweisungen, Spucktüten o. ä. vorgesehen. Kompakte oder kleine Gegenstände, wie Flaschen, Gläser, Joghurtbecher fallen entweder durch oder passen nicht zwischen den durch Rückenlehnenfläche und dem Klemmbügel 7 gebildeten Aufnahmebereich 7A. Der Klemmbügel 7 besteht vorzugsweise aus Kunststoff und ist nach oben und/oder seitlich offen, wobei dieser offene Bereich den Aufnahmebereich 7A bildet. Eine Bügelhalterung 7B als unterer Teil des Bügels 7 dient der Befestigung an der jeweiligen Rückenlehne 2A, 3A oder 4A. Der gesamte Klemmbügel 7 legt sich flächig an die Rückenlehne 2A, 3A oder 4A an und kann zum Einschieben oder Herausziehen von flachen Gegenständen im Aufnahmebereich 7A entgegen einer Haltespannung geöffnet werden. Das senkrechte oder seitliche Einschieben und Herausziehen des Inhalts kann einhändig erfolgen. Für die nötige Haltespannung lässt sich eine im Bereich der Bügelhalterung 7B angeordnete Feder oder auch die Eigenelastizität des Materials nutzen. Der Bügel 7 weist in der gezeigten Ausführung ein an der Bügelhalterung 7B angeordnetes bogenförmiges Rahmenelement 7C auf. Die offene Ausführung des Rahmenelementes 7C ermöglicht eine schnelle Sichtkontrolle des Inhalts des Zeitschriftenhalters. Die Gestaltung des Bügels 7 kann vielfältig ausgeführt sein. So ist statt Kunststoff auch anderes Material, z.B. Metall - als Draht oder Blech - denkbar und auch die Formen können vielfältig sein und als gestalterisches Element eingesetzt werden.
Neben dem Klemmbügel 7 weist die Ordnungsvorrichtung 6 zur Aufnahme von Zubehör und Abfall einen Abfallbehälter 8 auf. Für die Abfallbeseitigung in der Passagierkabine ist es für einen Passagier sitzplatzbezogen möglich, seinen Abfall zu entsorgen, ohne auf das Einsammeln durch den Flugbegleiter angewiesen zu sein und ohne die Abfälle im Zeitschriftenhalter 7 abzulegen. Aufgrund der Gestaltung des Zeitschriftenhalters als Klemmbügel 7 ist es für einen Passagier auch nicht mehr ohne weiteres möglich, dieses Element als Unterbringungsort für Abfall zu nutzen und die Nutzung des Abfallbehälters 8 ist demzufolge die einzige sinnvolle Möglichkeit, den Abfall zu beseitigen. Der Abfallbehälter 8 kann vorzugsweise am rückwärtigen Teil der Zwischenarmlehnen 9 und 10 angeordnet sein. Diese Anordnung stellt einen Kompromiss zwischen einer guten Zugänglichkeit für den Passagier und einem schnellen Entsorgungszugriff für das Reinigungspersonal dar. Denkbar ist es jedoch auch, den Abfallbehälter 8 je Sitzreihe nur einmal vorzusehen, wobei vorzugsweise eine Anbringung an der Armlehne 11 des gangseitigen Sitzes 4 erfolgen kann, um einen optimalen Zugriff für das Reinigungspersonal zu erreichen.
Der Abfallbehälter 8 kann auch in der vertikalen Verlängerung des rückwärtigen Teils der Armlehne 11 vorgesehen sein (nicht gezeigt), wobei bei diesem Anbringungsplatz das Reinigungspersonal einen optimalen Zugriff auf den Abfallbehälter 8 erreicht.

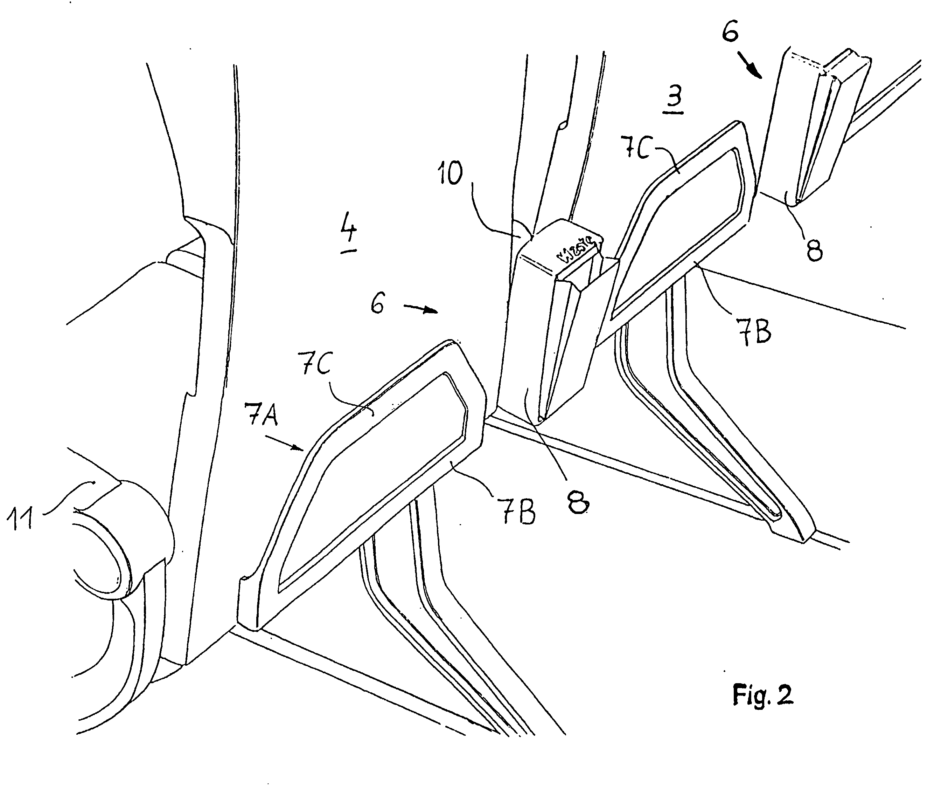

In Fig. 2 ist eine Detailansicht der ersten Ausgestaltung der Ordnungsvorrichtung 6 zur Aufnahme von sitzplatzbezogenem Zubehör an Passagiersitzen 2, 3 und 4 und eine Abfallaufnahme 8, die zwischen den Passagiersitzen 2, 3 und 4, vorzugsweise an den Zwischenarmlehnen angeordnet, gezeigt. Die Fig. 2 zeigt einen Abfallbehälter 8, der am rückwärtigen Teil der Zwischenarmlehne 9 oder 10 angeordnet ist. Der Abfallbehälter 8 kann auch an vorhandenen Sitzgruppen nachrüstbar bzw. leicht auswechselbar.

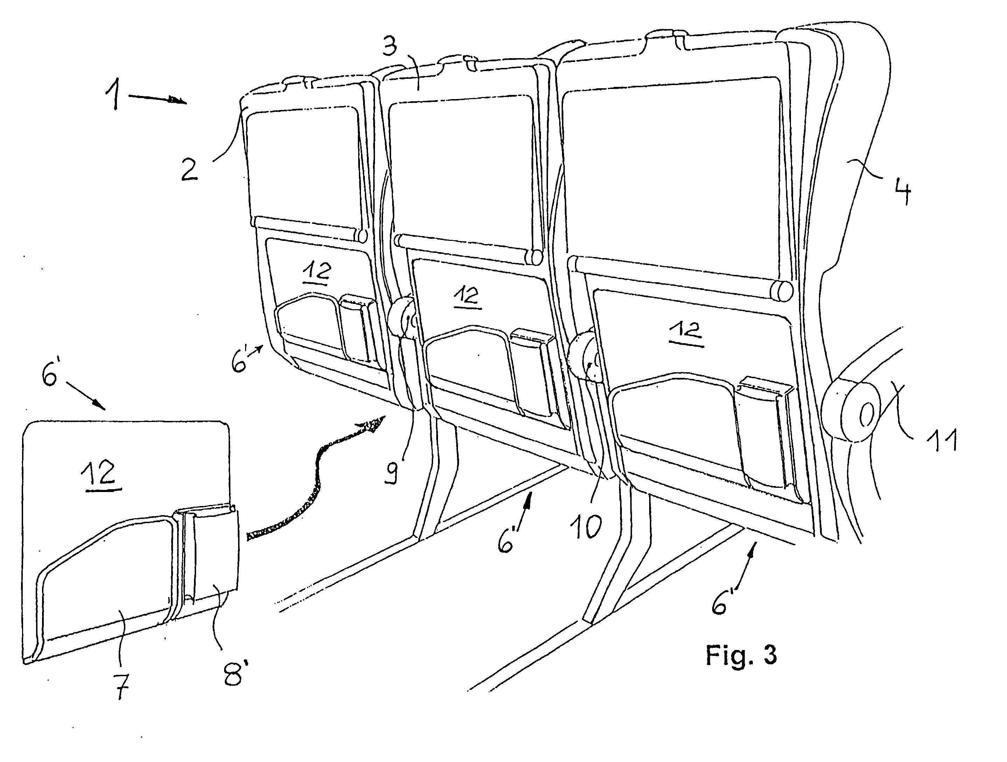

In Fig. 3 ist eine zweite Ausgestaltung der Ordnungsvorrichtung 6' dargestellt, die an Passagiersitzen 2, 3 oder 4 angeordnet ist. Die Ordnungsvorrichtung 6' ist in vorteilhafter Weise als Nachrüstversion für vorhandene Fluggastsitze nutzbar. Ersichtlich ist in der Fig. 3, dass der Klemmbügel 7 als Zeitschriftenhalter und der Abfallbehälter 8' in horizontaler Ebene nebeneinander angeordnet sind, wobei die Position des Abfallbehälters 8' dabei am gangwärts gerichteten Rand des Klemmbügels 7 vorgesehen ist. Der Klemmbügel 7 sowie der Abfallbehälter 8' können auf einer Grundplatte 12 angeordnet sein, die als Ganzes am Sitz 2, 3 oder 4 im rückwärtigen Bereich der Rückenlehnen 2A, 3A oder 4A montiert wird. Ebenso ist es aber auch möglich, dass beide Bauteile 7 oder 8' direkt am Sitz 2, 3 oder 4 befestigt werden.

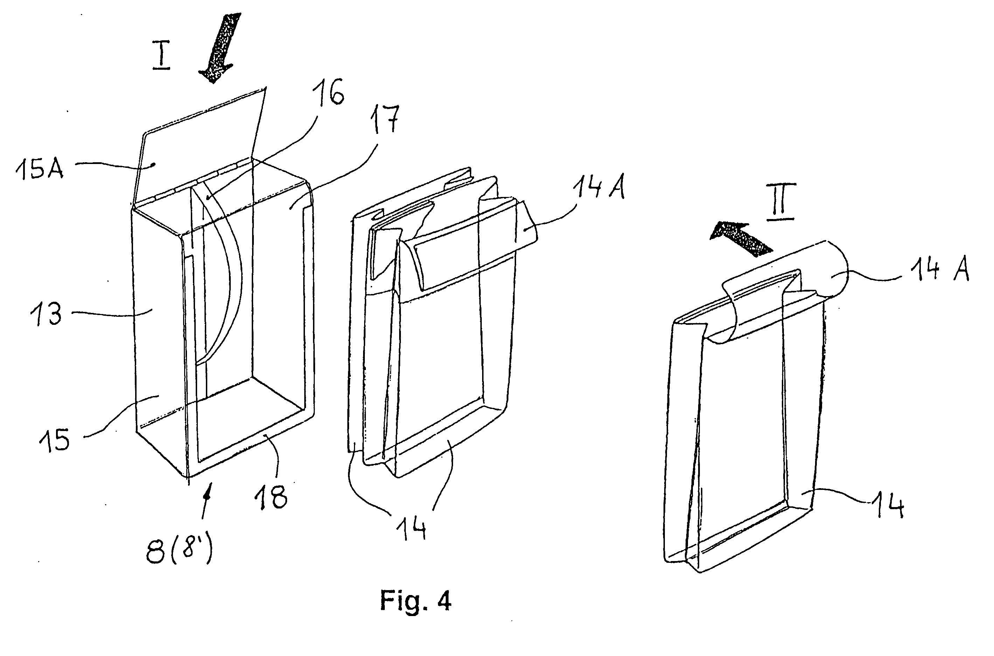

Die bisher beschriebenen Abfallbehälter 8 und 8' sind in den gezeigten Darstellungen als Tütenspender 13 mit integrierten Mülltüten 14 ausgebildet. Vorzugsweise finden einhändig zu entsorgende Mülltüten 14 Anwendung, die bei der Entnahme aus dem Tütenspender 13 automatisch die nächste, gebrauchsfertig geöffnete Mülltüte aus dem Tütenspender 13 nachführen. Es sind mehrere Ausführungsformen von Tütenspendern anwendbar, die aus dem Stand der Technik für vielfältige Anwendungen bekannt sind. Eine mögliche Ausführung eines erfindungsgemäßen Abfallbehälters 8 ist in der Fig. 4 dargestellt. Die Fig. 4 zeigt einen nach vorn offenen Vorratsbehälter 15, dessen Größe und Form entsprechend des Formats der Mülltüten 14 gestaltet ist. Mehrere Mülltüten 14 können in den Vorratsbehälter 15 eingefüllt werden, wie der Pfeil I darstellt. Zum Befüllen des Vorratsbehälters 15 können die Mülltüten 14 durch eine geöffnete Deckplatte 15A eingeführt werden. Eine Federspange 16 drückt die Tüten 14 zu einer Öffnung 17 an die Frontseite des Vorratsbehälters 15. Die der Öffnung 17 am nächsten liegende Mülltüte 14 ist nun der Benutzung zugänglich. Die Öffnung 17 ist am unteren Außenrand mit einer Falz 18 versehen. Damit wird die Tüte 14 innerhalb des Vorratsbehälters 15 gehaltert. Der obere Außenrand der Öffnung 17 weist keine Falz auf und ist so ausgebildet, dass ein leichtes Herausnehmen einer vollen Mülltüte 14 möglich ist. Für eine verlässliche Halterung der Mülltüten 14 an der Falz 18 kann die Rückwand der Tüten 14 versteift sein, beispielsweise mit Pappe. Auch ist eine umlaufende Verstärkung der Tüten 14 im oberen Einfüllbereich vorteilhaft, um ein Einreißen beim Herausnehmen der Tüten 14 zu verhindern. Neben der gezeigten Mülltüte 14 und dem Abfallbehälter 8 sind auch weitere Ausführungsformen denkbar, die ein Nachführen der Tüten und einfaches Entnehmen aus dem Behälter 8 ermöglichen.
Darüber hinaus kann eine zur Verstärkung gefaltete Lasche an der Verschlusslasche 14A helfen, die Tüte 14 ohne Berührung mit dem Inhalt aus der Entnahmeöffnung 17 zu ziehen. Nach der Entnahme der Mülltüte 14 wird die Faltung der Verschlusslasche 14A geöffnet und gemäß dem Pfeil II verschließt die Verschlusslasche 14A die Mülltüte 14.
Neben der gezeigten Mülltüte 14 und dem Abfallbehälter 8 sind auch weitere Ausführungsformen denkbar, die ein Nachführen der Tüten und einfaches Entnehmen aus dem Behälter 8 ermöglichen.

### Bezugszeichen

- 1 -: Passagiersitzgruppe
- 2, 3, 4 -: Passagiersitze
- 5 -: Tisch
- 6, 6' -: Vorrichtung zur Aufnahme von sitzplatzbezogenem Zubehör und Abfall
- 7 -: Klemmbügel
- 7A -: Aufnahmebereich
- 7B -: Bügelhalterung
- 7C -: Rahmenelement
- 8, 8' -: Abfallbehälter
- 9, 10 -: Zwischenarmlehnen
- 11 -: Armlehne an Gangseite
- 12 -: Grundplatte
- 13 -: Tütenspender
- 14 -: Mülltüte
- 14A -: Verschlusslasche am oberen Tütenrand
- 15 -: Vorratsbehälter
- 15A -: Deckplatte
- 16 -: Federspange
- 17 -: Entnahmebereich
- 18 -: Falz

## Patentansprüche

1. Passagiersitz mit einer Vorrichtung zur Aufnahme von sitzplatzbezogenem Zubehör und Abfall, wobei der Passagiersitz vorzugsweise Bestandteil einer Sitzgruppe in einer Flugzeugpassagierkabine ist und mindestens eine Vorrichtung (6, 6') zur Aufnahme von flachen Gegenständen im rückwärtigen Bereich von einer Rückenlehne (2A, 3A, 4A) des Passagiersitzes (2, 3, 4) angeordnet ist, **dadurch gekennzeichnet, dass** die Vorrichtung (6, 6') zur Aufnahme von flachen Gegenständen als ein Klemmbügel (7) ausgebildet ist, der mittels einer Bügelhalterung (7B) mit dem rückwärtigen Teil einer Rückenlehne (2A, 3A, 4A) verbunden ist und ein Rahmenelement (7C) vorgesehen ist, welches sich flächig an die Rückenlehne (2A, 3A, 4A) anlegt und entgegen einer Haltespannung einen Aufnahmebereich (7A) vorsieht und weiterhin bogenförmig ausgebildet ist und eine Öffnung umrahmt, die zum Hindurchfallen kompakter Gegenstände vorgesehen ist und ein Abfallbehälter im rückwärtigen Bereich der Rückenlehne des Passagiersitzes oder im Bereich des rückwärtigen Teils einer Armlehne des Passagiersitzes angeordnet ist.

2. Passagiersitz nach Anspruch 1, **dadurch gekennzeichnet, dass** der Abfallbehälter (8, 8') als Mülltütenspender (13) ausgebildet ist, der einen Vorratsbehälter (15) mit mindestens einer Mülltüte (14) aufweist.

3. Passagiersitz nach einem der Ansprüche 1 oder 2, **dadurch gekennzeichnet, dass** der Abfallbehälter (8, 8') in horizontaler Ebene neben dem Klemmbügel (7) an der Rückenlehne (2A, 3A, 4A) angeordnet ist.

4. Passagiersitz nach Anspruch 3, **dadurch gekennzeichnet, dass** der Klemmbügel (7) und der Abfallbehälter (8, 8') auf einer gemeinsamen Grundplatte (12) angeordnet sind, wobei die Grundplatte (12) an der Rückenlehne (2A, 3A, 4A) des Passagiersitzes (2, 3, 4) befestigt ist.

5. Passagiersitz nach einem der Ansprüche 1 bis 4, **dadurch gekennzeichnet, dass** die Vorrichtung (6) zur Aufnahme von Zubehör und Abfall mit Klemmbügel (7) und Abfallbehälter (8) als ein Nachrüstsatz ausgebildet und am rückwärtigen Teil der Rückenlehne (2A, 3A, 4A) befestigt ist.

## Claims

1. Passenger seat with a device for receiving accessories and refuse specific to the seating space, wherein said passenger seat is preferably a constituent part of a group of seats in the passenger cabin of an aircraft and at least one device (6, 6') for receiving flat objects is disposed in the rearward region of a backrest (2A, 3A, 4A) of the passenger seat (2, 3, 4), **characterised in that** the device (6, 6') for receiving flat objects is constructed as a clamping clip (7) which is connected by means of a clip mounting (7B) to the rearward part of a backrest (2A, 3A, 4A) and a frame element (7C) is provided which presses itself flat against said backrest (2A, 3A, 4A) and provides a receiving region (7A) against a retaining tension and is also of arcuate construction and frames an opening which is intended for the falling-through of compact objects, and a refuse receptacle is disposed in the rearward region of the backrest of the passenger seat or in the region of the rearward part of an armrest of the passenger seat.

2. Passenger seat according to claim 1, **characterised in that** the refuse receptacle (8, 8') is constructed as a rubbish bag dispenser (13) which has a storage receptacle (15) with at least one rubbish bag (14).

3. Passenger seat according to one of claims 1 or 2, **characterised in that** the refuse receptacle (8, 8') is disposed in a horizontal plane beside the clamping clip (7) on the backrest (2A, 3A, 4A).

4. Passenger seat according to claim 3, **characterised in that** the clamping clip (7) and the refuse receptacle (8, 8') are disposed on a common base plate (12), said base plate (12) being fastened to the backrest (2A, 3A, 4A) of the passenger seat (2, 3, 4).

5. Passenger seat according to one of claims 1 to 4, **characterised in that** the device (6) for receiving accessories and refuse with a clamping clip (7) and refuse receptacle (8) is constructed as a retrofit kit and is fastened to the rearward part of the backrest (2A, 3A, 4A).

## Revendications

1. Siège de passager avec dispositif destiné à recueillir des accessoires et déchets liés à la place assise, le siège de passager faisant de préférence partie d'un groupe de sièges d'une cabine de passagers d'un avion et au moins un dispositif (6, 6') destiné à recueillir des objets plats ayant été disposé dans la partie arrière d'un dossier (2A, 3A, 4A) du siège de passager (2, 3, 4), ledit siège étant **caractérisé en ce que** le dispositif (6, 6') destiné à recueillir des objets plats a été conçu sous la forme d'un étrier de serrage (7) raccordé à la partie arrière d'un dossier (2A, 3A, 4A), par l'intermédiaire d'un support d'étrier (7B) et **en ce qu'**un élément d'encadrement (7C) a été prévu, ledit élément attenant au dossier (2A, 3A, 4A), sur toute sa surface, prévoyant une zone de recueillement (7A) opposée à une tension de maintien, présentant une forme arquée et encadrant une ouverture prévue pour la chute d'objets compacts, et **en ce qu'**un conteneur à déchets a été disposé dans la partie arrière du dossier du siège de passager ou dans la zone de la partie arrière d'un accoudoir du siège de passager.

2. Siège de passager selon la revendication 1, **caractérisé en ce que** le conteneur à déchets (8, 8') a été conçu sous la forme d'un distributeur de sacs à déchets (13) avec réservoir (15) contenant au moins un sac à déchets (14).

3. Siège de passager selon la revendication 1 ou 2, **caractérisé en ce que** le conteneur à déchets (8, 8') a été disposé dans un plan horizontal, à côté de l'étrier de serrage (7) et contre le dossier (2A, 3A, 4A).

4. Siège de passager selon la revendication 3, **caractérisé en ce que** l'étrier de serrage (7) et le conteneur à déchets (8, 8') ont été disposés sur une plaque de base commune (12), la plaque de base (12) étant fixée contre le dossier (2A, 3A, 4A) du siège de passager (2, 3, 4).

5. Siège de passager selon une des revendications 1 à 4, **caractérisé en ce que** le dispositif (6) destiné à recueillir des accessoires et déchets a été conçu avec un étrier de serrage (7) et un collecteur à déchets (8), sous la forme d'un kit de rattrapage, et a été fixé contre la partie arrière du dossier (2A, 3A, 4A).
